# EUROPÄISCHE PATENTSCHRIFT

(11) **EP 0 527 285 B1**
(45) Veröffentlichungstag und Bekanntmachung des Hinweises auf die Patenterteilung: **13.08.1997**
(21) Anmeldenummer: 92101052.6
(22) Anmeldetag: 23.01.1992
(51) Int. Cl.: B41F 33/00, G06T 7/00, G01N 21/89

(54) **Verfahren zum Beurteilen von bedruckten Bogen**
Method for evaluating the quality of printed sheets
Procédé pour juger la qualité de feuilles imprimées

(30) Priorität: 12.08.1991 DE 4126582
(43) Veröffentlichungstag der Anmeldung: 17.02.1993
(73) Patentinhaber: KOENIG & BAUER-ALBERT AKTIENGESELLSCHAFT, 97080 Würzburg (DE)
(72) Erfinder: Bolza-Schünemann, Claus August, W-8700 Würzburg (DE); Bolza-Schünemann, Hans-Bernhard, Dr.-Ing., W-8700 Würzburg (DE); Germann, Albrecht Josef, W-8700 Würzburg (DE)

(56) Entgegenhaltungen:
- EP-A- 0 142 470
- EP-A- 0 159 880
- EP-A- 0 194 331
- EP-A- 0 332 706
- WO-A-89/07525
- CA-A- 1 204 880
- US-A- 4 390 958
- US-A- 4 561 103
- A.ROSENFELD 'multiresolution image processing and analysis' 1984 , SPRINGER , BERLIN
- PATTERN RECOGNITION Bd. 22, Nr. 4, 1989, ELMSFORD, NY US Seiten 367 - 380 SOBEY ET AL. 'detection and sizing visual features in wood'
- 16TH ANNUAL CONFERENCE OF IEEE INDUSTRIAL ELECTRONICS SOCIETY Bd. 1, 27. November 1990, ASILOMAR CONFERENCE CENTER CA. (US) Seiten 653 - 658 TANIMIZU 'high speed defect detection method for color printed matter'

## Beschreibung

Die Erfindung betrifft ein Verfahren zur qualitativen Beurteilung von bedruckten Materialien, beispielsweise Papier.

In der EP-A-01 42 470 ist ein Verfahren zur qualitativen Beurteilung von auf einem Druckträger, beispielsweise Papier aufgedruckten Druckbildern in Referenz zu einem OK-Druckbild mittels einer opto / elektronischen Aufnahmeeinrichtung beschrieben. Es ist eine Bezugsinformation-Speichereinrichtung zum Speichern der Bildinformation jedes Bildelementes des Druckbildes vorgesehen, wobei ein Druckbild in eine Vielzahl von Bildelementen (A1 bis E5) wahlweiser Größe aufgeteilt wird. Beim Verfahren nach dieser Entgegenhaltung wird ein Qualitätsmaßstab errechnet und angezeigt. Hierzu werden die Soll-/Istwertabweichungen mit einem jeweilig zugeordneten Vollton - und/oder
Empfindungs-Gewichtungsfaktor Gₑ bzw. Hₑ gewichtet und über einen oder mehrere ausgewählte Flächenbereiche des Druckerzeugnisses addiert (siehe Seite 10, Absatz 2).

Eine Einrichtung zur qualitativen Beurteilung von bedruckten Bogen ist z. B. durch die EP 01 94 331 A2 bekanntgeworden.

Druckvorlagen werden seit langem auf Druckqualität überprüft. Diese Überprüfung bezieht sich in der Regel auf die Messung von Farbdichtewerten in speziell dafür eingerichteten Meßfeldern, Registerabweichungen durch Messung spezieller Registerfehler und Kontrastmarken zur Ermittlung von Punktzuwachs und Kontrast. Eine elektronische Qualitätskontrolle über den gesamten Druckbogen konnte lange nicht durchgeführt werden. Seit einigen Jahren sind am Markt mit Hilfe von Bildaufnahmegeräten Überwachungseinrichtungen möglich, die einen Druckbogen oder einen Ausschnitt eines Druckbogens als stehendes Bild auf einen Monitor projizieren, so daß eine Online-Kontrolle der Druckvorlage durch den Drucker möglich ist.

Diese Bildvorlage wurde in einem Bildspeicher abgelegt, so daß ein stillstehendes Bild betrachtet werden konnte. Sobald dieses Bild vorhanden war, lag es nahe, alle weiteren Bilder, die die Maschine permanent produziert, mit dieser Vorlage im Bildspeicher zu vergleichen und etwaige Abweichungen zu signalisieren. Dieses Verfahren ist also bereits bekannt.

Der Erfindung liegt die Aufgabe zugrunde, ein Verfahren zur Kontrolle von bedruckten Bogen zu schaffen, bei dem das Ergebnis der Qualitätskontrolle durch eine opto / elektronische Vorrichtung weitgehend dem Ergebnis durch eine geschulte Prüfperson gleicht.

Die mit der Erfindung erzielbaren Vorteile bestehen insbesondere darin, daß die Anzahl der eingesetzten geschulten Prüfpersonen vermindert werden kann, ohne daß die Qualität der für gut befundenen Bogen vermindert wird. Prüfpersonen werden von dieser sehr anstrengenden Prüfarbeit, die immer wieder durch Erholungspausen unterbrochen werden muß, entlastet. Es ist ferner möglich, zulässige Registerschwankungen oder andere Abweichungen bei der Qualitätsprüfung zu berücksichtigen. Das Verfahren kann sowohl bei Rollen- wie auch bei Bogenrotationsdruckmaschinen Anwendung finden.

Das erfindungsgemäße Verfahren wird nachfolgend beschrieben.

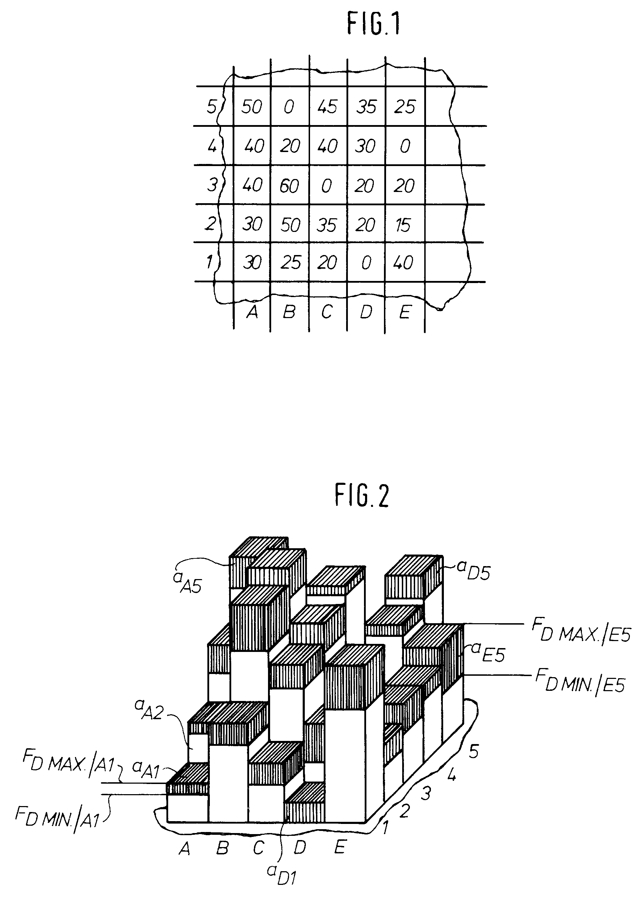

Die Figuren 1 und 2 zeigen eine Verteilung der Farbdichte- und Farbdichtetoleranzwerte für 25 Bildelemente eines Druckbildes.

Um einen fehlerfreien Bildvergleich vornehmen zu können, ist es unerläßlich, daß im Bildspeicher abgelegte Original ('Master') in x- sowie y-Koordinaten für jedes einzelne Bildelement (ein oder mehrere Pixel) auf die zu prüfende Bildvorlage zu positionieren.

Diese Übereinstimmung zwischen zu prüfendem Bild und 'Master'-Bild ist für die qualitative Aussage absolut notwendig, da pro Bildelement nur der Farbdichtewert, z. B. auch der Grauwert, als zu vergleichende Größe vorliegt.

Um einen Fehler detektieren zu können, wird eine Fehlerschwelle definiert, die bei Überschreitung der Soll/Istdifferenz pro Bildelement Fehler innerhalb dieses Bildelementes signalisiert. Dieses Verfahren zeigte sich jedoch in der Praxis als unbrauchbar, da eine exakte Übereinstimmung der einzelnen Bildelemente zwischen Master und Vorlage z. B. aufgrund von Deformationen im Druckträger nicht gewährleistet werden konnte.
Die Verschiebung von zu bewertenden Bildelementen untereinander bedingte eine große Soll/Istabweichung zur Auslösung eines Fehlers. Somit mußten jedoch Unzulänglichkeiten bei der Erkennung von Fehlern hingenommen werden, die insbesondere die Eigenschaften des menschlichen Auges in keiner Weise widerspiegelten.

Versuche haben erwiesen, daß das Auffinden von Fehlern im Druckbild durch visuelle Betrachtung subjektiv erfolgt. Bei der Betrachtung von homogenen Flächen (beispielsweise unbedruckte Stellen) agiert das menschliche Auge mit höchster Sensibilität bei der Fehlererkennung. Kleinste Unregelmäßigkeiten werden dort unverzüglich erkannt, während gleiche Unregelmäßigkeiten innerhalb von bedruckten Stellen schlechter erkannt werden. Diese Eigenschaft des menschlichen Auges und Gehirns bei der Fehlerbewertung soll beim Bildvergleich der Qualitätskontrolle nach dem erfindungsgemäßen Verfahren weitestgehendst verwirklicht werden.

Dazu wird in erfinderischer Weise jedem einzigen Bildelement eine individuelle Fehlertoleranz zugeordnet, so daß über den Bogen betrachtet in quasi der dritten Dimension die zulässigen Fehler als "Fehlergebirge" ersichtlich sind.

Der zulässige Toleranzbereich für jedes Bildelement wird durch Aufnahme von einer Mehrzahl von für "gut" befundenen Druckvorlagen bestimmt, die jedoch z. B. zulässige Registerfehler beinhalten. Diese Druckvorlagen (Druckbilder) ergeben pro Bildelement einen Minimal- und Maximalwert als zulässige Toleranz zum eigentlichen Farbdichtewert (z. B. Grauwert).

Durch dieses Bewertungsverfahren wird in homogenen Bildausschnitten eine extreme Sensibilität erreicht, gleichzeitig sind größte Toleranzen in Bereichen mit bespielsweise Registerfehlern zulässig.

Grundlegende Vorteile dieses Systems ist die flexible Auswertecharakteristik der zu kontrollierenden Druckbilder oder Druckvorlagen. Je nach Qualität und Quantität der gelesenen und als 'Master'- Bild benutzten Vorlagen mit dem daraus gewonnen Farbdichtewert und dazugehörigen dreidimensionalen Toleranzfeld pro Bildelement erfolgt das Farbdichteabtasten fortlaufend und damit die Auswertung der zu kontrollierenden Vorlagen.

Dabei werden Bildelemente mit Farbdichtewerten außerhalb des jeweils zulässigen Toleranzfeldes als Fehler-Koordinaten gemeldet und beispielsweise in Alarmfarbe auf einem Monitor oder mit Hilfe einer Markiereinrichtung, z. B. Ink-jet-Einrichtung auf der Vorlage allgemein oder an der dem Fehler entsprechenden Stelle gekennzeichnet.

Das Verfahren gewährleistet in homogenen, von der absoluten Farbdichte unabhängigen Bildelementen eine extreme Fehlersensibilität und läßt trotzdem Registerschwankungen zu, d. h. es hängt nur von der zulässigen Farbdichteschwankungstoleranz der einzelnen Bildelemente ab.

Aus den Figuren 1 und 2 ist der Verlauf von Farbdichte- und Farbdichtetoleranzwerten für beispielsweise 25 Bildelemente eines gedruckten Bildes auf einem Druckträger, z. B. Papier, ersichtlich.

In Bild 1 ist eine beispielhafte Soll-Farbdichtenverteilung in Prozent für einen Ausschnitt aus einem bedruckten Bogen anhand einer Mehrzahl von Bildelementen A1 bis E5 dargestellt. Diese Sollwerte könnten z. B. durch das an sich bekannte Scannen eines "ideal" bedruckten Bogens mittels einer CCD-Flächen- oder Zeilenkamera und anschließendem Abspeichern der ermittelten Farbdichtewerte pro Bildelement A1 bis E5 ermittelt werden.
Nun ist es aber Tatsache, daß diese Farbdichtewerte sich während des Druckprozesses z. B. durch Farbregisterschwankungen laufend verändern können. So weicht z. B. der Farbdichtewert F_{D/D1} des Bildelementes D1 vom Soll-Wert Null um einen bestimmten Wert ab.
Oder die Farbdichtewerte F_{D} 40 % und 20 % der benachbarten Bildelemente A4 und B4 haben sich durch äußere Einflüsse auf 35 % bzw. 25 % verändert.

Würde man nun einheitlich Farbdichtewerteschwankungen für alle Bildelemente A1 bis E5 mit dem gleichen Toleranzbereich bewerten, so würden Bogen als "schlecht" aussortiert oder gekennzeichnet werden, die bei der subjektiven Betrachtung durch eine geschulte Prüfperson als "gut" akzeptiert würden. Das kann, wie schon oben gesagt, in erfinderischer Weise dadurch vermieden werden daß jedem einzelnen Bildelement A1 bis E5 ein jeweils diesem Bildelement A1 bis E5 zugeordneter Toleranzbereich ^{a}A1 bis ^{a}E5 zugeordnet wird.
Z. B. wird für das Bildelement A1 ein Toleranzbereich ^{**a**}A1 = 10 % ( [Maximal zulässiger Farbdichtewert F_{D MAX} minus minimal zulässiger Farbdichtewert F_{D MIN}] dividiert durch F_{D MIN} ) für das Bildelement E5 z. B. ^{a}E5 = 100 %, zugelassen.

Diese individuelle zulässige Farbdichtenabweichungs-Toleranzzuordnung ^{a}A1 bis ^{a}E5 für jedes einzelne Bildelement A1 bis E5 ermöglicht eine optimale automatische Qualitätskontrolle von Druckbogen, welche den "Prüfblick" der geschulten Prüfperson nachempfindet und so unnötige Aussortierungen von "praktisch" guten Druckbogen vermeidet.

Das praktische Ergebnis ist in der Fig. 2 dargestellt. Es ist zu sehen, daß jedes der aus der bedruckten Druckfläche als Beispiel ausgewählten Bildelemente A1 bis E5 seine eigene, nur ihm zugeordnete Farbdichtenabweichungstoleranz ^{a}A1 bis ^{a}E5 hat.

Zu Beginn eines jeden neuen Druckauftrages wird die Anzahl der Pixel für jedes Bildelement (ein oder mehrere Pixel) durch eine Person festgelegt.

In der Praxis wird diese individuelle zulässige Farbdichtenabweichungstoleranz ^{a}A1 bis ^{a}E5 dann auf einfache Weise, z. B. wie folgt ermittelt.
Die geschulte Prüfperson gibt das Kommando an die Prüfeinrichtung, nachfolgend eine Mehrzahl von Druckbogen zu scannen, die so erhaltenen Farbdichtewerte für jedes Bildelement jedes der Druckbogen zwischenzuspeichern und jeden der Bogen durch eine Markierungseinrichtung mit einer Identifizierungsnummer zu versehen. Die Prüfperson unterwirft diese numerierten Prüfbogen einer visuellen Kontrolle und entscheidet, ob sie brauchbar oder nicht brauchbar sind. Die Farbdichtewerte der unbrauchbaren Prüfbogen löscht sie aus dem Zwischenspeicher, für die brauchbaren Prüfbogen wird jeweils ein Befehl ausgelöst, um deren zwischengespeicherte Farbdichtewerte F_{D} A1 ... F_{D} E5 in den Hauptspeicher des Computers umzuspeichern.
Ein entsprechendes Programm ermöglicht es, daß sämtliche Farbdichtewerte gleicher Bildelemente A1 bis E5 sämtlicher gescannter Gutbogen z. B. 20 Stück abgarbeitet werden und für jedes Bildelement A1 bis E5 aus der Menge der ihm zugeordneten gemessenen Farbdichtewerte jeweils, sobald neue Prüfwerte eines visuell geprüften Druckbogens eingegeben werden, ein neuer aktueller maximaler und ein minimaler Farbdichtewert F_{D MAX/A1} und F_{D MIN/A1} bis F_{D MIN/E5'} F_{D MAX/E5} für jedes Bildelement gebildet wird.
Für jedes Bildelement A1 bis E5 wird also aus der Differenz von F_{D MAX} und F_{D MIN} ein zulässiger Farbdichteabweichungsbereich ^{a}_{A1} bis a_{E5} gebildet und abgespeichert.

Die so ermittelten aktuellen Werte von F_{D MAX} und F_{D MIN} für jedes Bildelement A1 bis E5 sind anschließend an ihre Ermittlung die festgelegten Toleranzbereiche für die automatische Farbdichtewerte - Kontrolle jedes Bildelementes der zu prüfenden Druckbogen.

Die bei der automatischen Qualitätskontrolle beanstandeten Druckbogen werden von einer automatischen Markiereinrichtung z. B. einer Ink-jet-Einrichtung, an nicht störender Stelle auf dem Druckbogen z. B. mit einer Nununer bedruckt und u. U. auch mit einer Koordinatenangabe, wo sich die abweichende Druckfläche auf dem Druckbogen befindet und in z. B. einem Makulatur-Auslagestapel in bekannter Weise aogelegt.

Die Farbdichtemeßwerte F_{D} von derartigen Druckbildern werden im Computer unter der Adresse der aufgedruckten Nummer abgespeichert. Stellt nun die Prüfperson fest, daß ein derartiger Bogen verwendet werden kann, so tippt er die Bogennummer ein, bestätigt seine Eingabe. Damit werden die Farbdichtewerte die außerhalb der bisher geltenden Farbdichtewerte lagen, den bereits vorhandenen, betroffenen Bildelementen z. B. A3 und B3 automatisch zugeführt. Entsprechend den Computerprogrammen werden für die betroffenen Bildelemente, im Beispiel A3 und B3, neue zulässige maximale und / oder minimale Farbdichtewerte F_{D/MAX'} F_{D/MIN} gebildet.
Mit diesen neuen Werten werden dann die weiteren gescannten Druckbilder, z. B. Bogen, verglichen. Je nach Ergebnis dieser opto / elektronischen Auswertung entscheidet Qualitätsprüfeinrichtung selbsttätig, ob ein Druckbild "gut" oder "schlecht" ist, und gibt an eine elektronische Einrichtung Befehle, die derartige Befehle in die Steuerkommandos umformt, um so z. B. Weichen für den Makulaturstapel und / oder eine Markierungseinrichtung zu aktivieren.

Das erfindungsgemäße Verfahren kann zur qualitativen Beurteilung von Druckbildern von sowohl Bogen- wie auch Rollenrotationsdruckmaschinen herangezogen werden. Als Druckträger ist nicht nur Papier (Bogen oder Bahn), sondern auch Kunststoffolien, Plastikkarten, Blech usw. verwendbar.

## Patentansprüche

1. Verfahren zur qualitativen Beurteilung von auf einem Druckträger, beispielsweise Papier, aufgedruckten Druckbildern mittels einer opto / elektronischen Aufnahmeeinrichtung zur Ermittelung von Farbdichtewerten und einer Bezugsinformation - Speichereinrichtung zum Speichern von Bildinformation jedes Bildelementes des Druckbildes, wobei jedes Druckbild in eine Vielzahl von Bildelementen (A1 bis E5) aufgeteilt wird,
wobei aufgrund visueller Prüfergebnisse von Druckbildern eine Mehrzahl von OK-Druckbilder bestimmt wird, und wobei von den an den OK-Druckbildern ermittelten Farbdichtewerten für jedes einzelne der Bildelemente (A1 bis E5) ein jeweils individueller, maximal zulässiger Farbdichtewert (F_{D MAX}) und / oder ein jeweils individueller, minimal zulässiger Farbdichtewert (F_{D MIN}) gebildet und abgespeichert werden /wird.

2. Verfahren zur automatischen Qualitätskontrolle von auf einem Druckträger, beispielsweise Papier, aufgedruckten Druckbildern mittels einer opto / elektronischen Aufnahmeeinrichtung zur Ermittelung von Farbdichtewerten und einer Bezugsinformation - Speichereinrichtung zum Speichern von Bildinformation jedes Bildelementes des Druckbildes,
wobei jedes Druckbild in eine Vielzahl von Bildelementen (A1 bis E5) aufgeteilt wird und jedem Bildelement jeweils ein individueller maximal zulässiger Farbdichtewert (F_{D MAX}) und / oder ein jeweils individueller, minimal zulässiger Farbdichtewert (F_{D MIN}) zugeordnet werden / wird, und
wobei bei Abweichung von an Druckbildern ermittelten Farbdichtewerten von den jeweils maximal und /oder minimal zulässigen Farbdichtewerten (F_{D MAX}, F_{D MIN}) abweichende Farbdichtewerte bestimmt werden und nach visueller Überprüfung der Druckbilder und Bestimmung der Druckbilder als OK-Druckbilder von den abweichenden Farbwerten neue zulässige maximale und / oder minimale Farbdichtewerte (F_{D MAX}, F_{D MIN}) gebildet werden.

3. Verfahren nach Anspruch 1, dadurch gekennzeichnet, daß die zulässigen maximalen und / oder minimalen Farbdichtewerte (F_{D MAX}, F_{D MIN}) der Bildelemente (A1 bis E5) veränderbar sind.

4. Verfahren nach Ansprüchen 1 bis 3, dadurch gekennzeichnet, daß Bildelemente (A1 bis E5) von Druckbildern, deren Farbdichtewerte außerhalb der jeweiligen zulässigen maximalen und / oder minimalen Farbdichtewerten (F_{D MAX,} F_{D MIN}) liegen, auf einem Betrachterbildschirm auffällig markiert werden.

5. Verfahren nach Ansprüchen 1 bis 4, dadurch gekennzeichnet, daß Druckbilder, welche Bildelemente (A1 bis E5) enthalten, deren Farbdichtewerte außerhalb der jeweils zulässigen maximalen und /oder minimalen Farbdichtewerte (F_{D MAX,} F_{D MIN}) liegen, mit einem
Identifizierungszeichen und / oder einer Angabe zur einfachen Identifizierung der Lage solch fehlerhafter Bildelemente versehen werden.

## Claims

1. Method for the qualitative assessment of printed images, printed on a printing medium, for example paper, by means of an opto/electronic pick-up device for determining ink density values and a reference-information storage device for storing image information on each image element of the printed image, wherein each printed image is divided up into a multiplicity of image elements (A1 to E5),
wherein a plurality of acceptable printed images are determined on the basis of visual test results of printed images, and wherein, from the ink density values determined from the acceptable printed images, for each one of the image elements (A1 to E5) a respective individual, maximum-permissible ink density value (F_{D MAX}) and/or a respective individual, minimum-permissible ink density value (F_{D MIN}) are/is formed and stored.

2. Method for the automatic quality control of printed images, printed on a printing medium, for example paper, by means of an opto/electronic pick-up device for determining ink density values and a reference-information storage device for storing image information on each image element of the printed image,
wherein each printed image is divided up into a multiplicity of image elements (A1 to E5) and each image element is respectively assigned an individual, maximum-permissible ink density value (F_{D MAX}) and/or a respective individual, minimum-permissible ink density value (F_{D MIN}), and
wherein, in the event of a deviation from ink density values determined from printed images, ink density values deviating from the respective maximum- and/or minimum-permissible ink density values (F_{D MAX}, F_{D MIN}) are determined and, after visual checking of the printed images and determination of the printed images as acceptable printed images, new permissible maximum and/or minimum ink density values (F_{D MAX}, F_{D MIN}) are formed from the deviating ink values.

3. Method according to Claim 1, characterised in that the permissible maximum and/or minimum ink density values (F_{D MAX}, F_{D MIN}) of the image elements (A1 to E5) are variable.

4. Method according to Claims 1 to 3, characterised in that image elements (A1 to E5) of printed images whose ink density values are outside the respective permissible maximum and/or minimum ink density values (F_{D MAX}, F_{D MIN}) are clearly marked on a viewing screen.

5. Method according to Claims 1 to 4, characterised in that printed images which contain image elements (A1 to E5) whose ink density values are outside the respective permissible maximum and/or minimum ink density values (F_{D MAX}, F_{D MIN}) are provided with an identification mark and/or an indication allowing simple identification of the position of such defective image elements.

## Revendications

1. Procédé pour juger la qualité d'images imprimées sur un support d'impression, par exemple du papier, au moyen d'un dispositif d'enregistrement optoélectronique servant à déterminer des valeurs de densité optique et d'un dispositif de mémorisation d'informations de référence servant à mémoriser des informations d'image de chaque élément d'image de l'image imprimée, chaque image imprimée étant divisée en une pluralité d'éléments d'image (A1 à E5), une pluralité d'images imprimées validées étant déterminée sur la base des résultats d'un contrôle visuel et, à partir des valeurs de densité optique déterminées sur les images imprimées validées, une valeur individuelle admissible de densité optique maximale (F_{D MAX}) et/ou une valeur individuelle admissible de densité optique minimale (F_{D MIN}) étant formée pour chacun des éléments d'image (A1 à E5) et mémorisée.

2. Procédé de contrôle qualitatif automatique d'images imprimées sur un support d'impression, par exemple du papier, au moyen d'un dispositif d'enregistrement optoélectronique servant à déterminer des valeurs de densité optique et d'un dispositif de mémorisation d'informations de référence servant à mémoriser des informations d'image de chaque élément d'image de l'image imprimée, chaque image imprimée étant divisée en une pluralité d'éléments d'image (A1 à E5), une valeur individuelle admissible de densité optique maximale (F_{D MAX}) et/ou une valeur individuelle admissible de densité optique minimale (F_{D MIN}) étant affectée à chacun des éléments d'image et, en cas d'écart entre les valeurs de densité optique déterminées sur les images imprimées et les valeurs maximale et/ou minimale admissibles de densité optique (F_{D MAX}, F_{D MIN}), des valeurs de densité optique divergentes sont déterminées et, après contrôle visuel et validation des images imprimées, de nouvelles valeurs maximale et/ou minimale admissibles de densité optique (F_{D MAX}, F_{D MIN}) sont formées à partir des valeurs optiques divergentes.

3. Procédé selon la revendication 1, caractérisé en ce que les valeurs maximale et/ou minimale admissibles de densité optique (F_{D MAX}, F_{D MIN}) des éléments d'image (A1 à E5) peuvent être modifiées.

4. Procédé selon les revendications 1 à 3, caractérisé en ce que les éléments d'image (A1 à E5) des images imprimées dont les valeurs de densité optique se situent à l'extérieur des valeurs maximale et/ou minimale admissibles de densité optique (F_{D MAX}, F_{D MIN}) sont mis en évidence sur un écran de surveillance.

5. Procédé selon les revendications 1 à 4, caractérisé en ce que les images imprimées contenant des éléments d'image (A1 à E5) dont les valeurs de densité optique se trouvent à l'extérieur des valeurs maximale et/ou minimale admissibles de densité optique (F_{D MAX}, F_{D MIN}) sont pourvues d'un signe d'identification et/ou d'une indication permettant de repérer facilement l'endroit où se trouvent ces éléments d'image non conformes.
